# EUROPÄISCHE PATENTSCHRIFT

(11) **EP 3 714 248 B1**
(45) Veröffentlichungstag und Bekanntmachung des Hinweises auf die Patenterteilung: **30.08.2023**
(21) Anmeldenummer: 18807938.8
(22) Anmeldetag: 21.11.2018
(51) Int. Cl.: G01M 3/28, G01F 3/26

(54) **LECKAGEÜBERWACHUNGSVORRICHTUNG FÜR EINE WELLENDICHTUNG**
LEAKAGE MONITORING DEVICE FOR A SHAFT SEAL
DISPOSITIF DE SURVEILLANCE DE FUITE POUR GARNITURE D'ÉTANCHÉITÉ D'ARBRE

(30) Priorität: 21.11.2017 DE 102017220753
(43) Veröffentlichungstag der Anmeldung: 30.09.2020
(73) Patentinhaber: KSB SE & Co. KGaA, 67227 Frankenthal (DE)
(72) Erfinder: LAUE, Stefan, 67227 Frankenthal (DE); OBERMAIR, Frank, 67227 Frankenthal (DE); URBAN, Lutz, 67227 Frankenthal (DE); VEGA-VÖLK, Josephine, 67227 Frankenthal (DE); BERNHARDT, Manuel, 76829 Landau (DE)
(86) Internationale Anmeldenummer: PCT/EP2018/082025
(87) Internationale Veröffentlichungsnummer: WO 2019/101775

(56) Entgegenhaltungen:
- EP-A1- 2 707 761
- DE-B- 1 227 252
- JP-A- H05 223 683
- JP-A- S57 208 414
- JP-A- 2001 201 385
- JP-A- 2010 237 056
- US-A- 778 887
- US-A- 3 589 737
- US-A1- 2003 015 840

## Beschreibung

Die Erfindung betrifft eine Leckageüberwachungsvorrichtung für eine Wellendichtung, insbesondere für eine Kreiselpumpe, insbesondere eine Wellendichtung in Form einer Gleitringdichtung.

Eine Gleitringdichtung, kurz GLRD, ist ein Maschinenelement, welches dazu dient die Durchtrittsstelle eines rotierenden Bauteils, das durch eine Gehäusewand geführt wird, gegenüber der Umwelt abzudichten. Eine solche Wellendichtung wirkt als Barriere zwischen dem Gehäuseinneren und der Umgebung. Dabei kann eine Gleitringdichtung als eine axiale Drossel betrachtet werden, welche den vorherrschenden Druck des abzudichtenden Mediums über den Dichtspalt auf den Umgebungsdruck reduziert.

Bei einer Gleitringdichtung ist eine geringe Leckage durch die permanente Ausbildung des im Dichtspalt herrschenden Schmierfilms unvermeidbar. Diese Leckage wird auch als Nennleckage bezeichnet. Die Leckagerate, die das Austreten des Leckagevolumens einer GLRD pro Zeitintervall angibt, ist von zahlreichen Faktoren abhängig.

Das Austreten der Leckage in die Atmosphäre erfolgt in Form von Dampf- oder Tröpfchenleckage. Bei einwandfreier Funktion der GLRD entweicht die Leckage zumeist dampfförmig. Dies liegt zum einen an den hohen Temperaturen und zum anderen an dem im Dichtspalt vorherrschenden Druckabfall. So ist die Leckage zumeist ohne weitere Hilfsmittel mit dem bloßen Auge nicht sichtbar. Liegt dagegen eine sichtbar austretende Leckage vor, so kann in aller Regel davon ausgegangen werden, dass erhöhter Verschleiß vorliegt oder die Dichtung beschädigt ist und ihre Funktion nicht mehr ausreichend erfüllen kann.

Die Ursachen von Leckage können sehr unterschiedlich und vielfältig sein. Bei einer Leckage kann es sich auch um das Austreten eines Wärmeträgermediums über die Gleitringdichtung handeln. Eine erhöhte Leckage liegt in den Fällen vor, wenn entweder ein Defekt an der Gleitringdichtung auftritt oder sich aufgrund der vorliegenden Bedingungen ein zu großer Dichtspalt zwischen den Gleitflächen einstellt.

Defekte resultieren mitunter daraus, dass Gleitringdichtungen während des Einsatzes oftmals stark variierenden Betriebsschwankungen ausgesetzt sind. Dabei kann es, durch die Stärke dieser Schwankungen, in einigen Fällen zu temporärer Überschreitung des für die GLRD zulässigen Betriebsbereichs kommen. Die Schadensursachen sind sowohl vom Typ bzw. der Bauart der GLRD abhängig sowie auch von den zum Einsatz kommenden Werkstoffpaarungen.

Der Ausfall oder Defekt einer GLRD kann, falls dieser nicht rechtzeitig erkannt wird, weitreichende Auswirkungen beispielsweise für Pumpe und für das gesamte technische System zur Folge haben. So können neben den Aufwendungen für die Reparatur oder den Ersatz der Gleitringdichtung weitere schwerwiegende Folgeschäden entstehen, die einen erheblichen wirtschaftlichen Schaden seitens des Anlagenbetreibers verursachen können. Bei unüblich hohen Leckageraten kann auch das hinter der Gleitringdichtung liegende Wälzlager Schaden nehmen.

Die EP 2 707 761 A1 beschreibt eine Einrichtung zur Messung der während eines bestimmten Zeitintervalls fließenden Flüssigkeitsmenge, wobei die Flüssigkeit gezielt auf eine bestimmte Zone der Aufnahmevorrichtung gelenkt wird.

Die US 778 887 A beschreibt eine gattungsgemäße Messvorrichtung.

Die DE 12 27 252 B beschreibt ein Gerät zur Anzeige und/oder Messung kleiner durch das Gerät fließender Flüssigkeitsmengen mit einem Messgefäß, das in einem mit druckdichten Ein- und Austrittsstutzen für die Flüssigkeit versehenen Behälter kippbar gelagert ist.

Die JP S57 208414 A beschreibt eine Vorrichtung zur Überwachung von Leckage, bei der sich wiederholende Vorgänge von Detektoren erfasst und hinsichtlich der Zeitdauer beurteilt werden.

Die JP 2001 201385 A beschreibt einen Schaltmechanismus, der in Abhängigkeit der erfassten Flüssigkeitsmenge agiert.

Die US 3 589 737 A beschreibt eine Gleitringdichtung für eine vertikal rotierende Welle, bei der die Leckage seitlich in einen Behälter abgeführt wird.

Die US 2003/015840 A1 beschreibt eine Gleitringdichtungsbaugruppe mit einem Leckdetektor, der einen faseroptischen Sensor zur Erkennung von Leckage umfasst.

Die JP H05 223683 A beschreibt eine Vorrichtung zur Überwachung von Leckage, bei der ein Öl-Wasser-Gemisch mittels eines Filters in die einzelnen Bestandteile separiert wird, wobei das Wasser mittels eines Bypasses abgeführt wird.

Die JP 2010 237056 A beschreibt einen volumetrischen Durchflussmesser mit einer Kippanordnung.

In der DE 3818416 C1 wird eine Leckage-Überwachungsvorrichtung beschrieben. Diese umfasst ein Aufnahmegefäß für die aus einem Aggregat austretende Flüssigkeit. Das Gefäß ist in vertikaler Richtung elastisch gelagert. Eine Einrichtung dient der Erfassung der vertikalen Position des Aufnahmegefäßes. Bei Erreichen einer vorgebbaren Absenkung des Aufnahmegefäßes wird ein Signal, beispielsweise in Form eines Alarms ausgelöst.

Die EP 1 625 375 81 beschreibt eine Überwachungseinrichtung für flüssigkeitsführende Systeme. Zwischen sich gegeneinander bewegenden Flächen ist eine Dichtung angeordnet und mit einem Leckage-Sammelmittel verbunden. Am Leckage-Sammelmittel ist ein zur Erfassung einer Füllstandshöhe einer Leckagemenge gestalteter kapazitiver Sensor angeordnet. Der kapazitive Sensor ist zur kontinuierlichen Erzeugung von Ausgangssignalen gestaltet. Am Leckage-Sammelmittel ist ein rohrförmiger Abfluss für einen kontinuierlichen Abfluss einer Leckagemenge angebracht. Das Leckage-Sammelmittel ist als rinnenartiges und offenes oder geschlossenes Rohr ausgebildet. Das Leckage-Sammelmittel besteht aus einem elektrisch nicht leitenden Material. Der Sensor ist seitlich außen an der Wand des Leckage-Sammelmittels angekuppelt.

Aufgabe der Erfindung ist es, eine Vorrichtung und ein Verfahren zur Überwachung der Leckage einer Wellendichtung anzugeben, durch die ein mögliches Versagen der Wellendichtung möglichst frühzeitig erkannt wird, so dass Betriebsausfälle vermieden werden und keine damit verbundenen Kosten anfallen. Die Vorrichtung soll auf einfache und kostengünstige Weise auch in bereits bestehende Anlagen, insbesondere Kreiselpumpenanordnungen, integrierbar sein. Weiter soll mit der Vorrichtung auch die Überwachung bei der Förderung von gefährlichen Medien gewährleistet sein, wie dies z.B. bei Wärmeträgeröl-Pumpen der Fall ist, da hier das unentdeckte Austreten des brennbaren Mediums zu Bränden führen kann und somit die Folgekosten eines Ausfalls besonders hoch sein können. Die Vorrichtung soll sich durch eine zuverlässige Betriebsweise sowie eine lange Lebensdauer auszeichnen. Weiterhin soll die Vorrichtung möglichst preiswert zu fertigen sein und geringe zusätzliche Betriebskosten verursachen.

Diese Aufgabe wird durch eine Vorrichtung mit den Merkmalen des Anspruchs 1 und einem Verfahren mit den Merkmalen des Anspruchs 11 gelöst. Bevorzugte Varianten sind den Unteransprüchen, der Beschreibung sowie den Zeichnungen zu entnehmen.

Erfindungsgemäß weist die Vorrichtung zur Überwachung der Leckage einer Wellendichtung eine Kippanordnung auf. Die Kippanordnung umfasst mindestens ein Reservoir zur Aufnahme eines Leckagefluids. Mit einem Bauteil wird die Anzahl an Kippbewegungen erfasst und darüber mittels einer Auswerteeinheit die Leckagemenge berechnet. Es werden somit folgende Schritte nacheinander durchgeführt:
- Sammeln des Leckagestroms in einem Reservoir der Kippanordnung,
- Auslösen einer Kippbewegung bei Überschreitung eines Füllstandsgrenzwertes,
- Erfassung der Kippbewegung,
- Berechnung der Leckagemenge.

Die Kippanordnung kann einen "Kipplöffel" oder Kippwaage (Wippe) umfassen. Bei beiden Systemen füllt sich jeweils ein Behältnis mit dem Leckagefluid. Ab einem bestimmten Gewicht kippt dieses und entleert sich. Aus der Anzahl der Kippbewegungen kann die Leckagemenge berechnet werden. Die Kippungen können mit einem Magneten an der Kippanordnung und einem gegenüber fixierten Reedkontakt elektrisch erfasst werden.

Die Kipplöffel-Variante umfasst ein Element, das ähnlich wie ein Löffel geformt ist und in einem Reservoir Leckagefluid aufnehmen kann.

Bei einer besonders vorteilhaften Variante der Erfindung umfasst die Vorrichtung mindestens zwei Reservoirs zur abwechselnden Füllung mit dem Leckagefluid. Vorzugsweise sind die Reservoirs gleich groß. Diese als Wippe bzw. Waage ausgeführte Variante der Erfindung besitzt eine zweigeteilte Messkammer. Dadurch geht auch während dem eigentlichen Kippvorgang keine Leckageflüssigkeit verloren, wie es beim Löffel der Fall sein kann.

Die Kippanordnung weist ein schwenkbar gelagertes Element, vorzugsweise ein Behältnis mit mindestens einem Reservoir auf.

Bei einer Variante der Erfindung ist das Element als Wippe ausgeführt und umfasst zwei gleiche Reservoirs, die durch eine Wandung voneinander abgegrenzt sind. Entscheidend für die Konstruktion ist die Lage des Schwerpunkts. Um zu gewährleisten, dass das ungefüllte Element eine seitlich gekippte Lage mit definiertem Winkel einnimmt, liegt der Schwerpunkt über dem Schwenkpunkt.

Bei einer besonders günstigen Variante der Erfindung weist die Vorrichtung ein Oberteil und ein Unterteil auf, welche die Kippanordnung zumindest teilweise umschließen.

Vorzugsweise umfasst das Oberteil einen Anschluss für den Eintritt des Leckagestroms in die Vorrichtung. Erfindungsgemäß weist das Oberteil Überlaufkanäle zur Führung des Leckagestroms auf. Erfindungsgemäß umfasst das Oberteil einen Trichter für die Zuführung des Leckagestroms zur Kippanordnung.

Das Oberteil kann als Deckel der Vorrichtung dienen. Eine plane Fläche auf der Oberseite des Deckels kann die Ausrichtung bzw. Nivellierung der Vorrichtung ermöglichen, beispielsweise mittels einer Libelle, die eine Öffnung schaffen kann für einen Reinigungszugang, insbesondere für die Kapillare. Bei einer Variante nimmt ein Zulaufkanal im Oberteil die Leckage auf und führt diese in einen Trichter, der erfindungsgemäß gemeinsam mit einer Kapillare eine Dosiereinheit bildet.

Das Unterteil, das im Folgenden auch als Unterbau bezeichnet wird, weist vorzugsweise eine Lagerung für die Kippanordnung auf. Bei einer Variante handelt es sich dabei um zwei V-förmige Aufnahmen. Das Unterteil weist vorzugsweise eine Halterung für das Bauteil auf, welches die Kippbewegungen erfasst. Bei dem Bauteil kann es sich beispielsweise um einen induktiven und/oder kapazitiven Sensor handeln. Bei einer Variante weist das Unterteil einen Anschluss zur Ableitung des Leckagestroms auf.

Erfindungsgemäß weist die Vorrichtung einen Bypass auf zur Ableitung von Leckagefluid bei einer Überschreitung eines Grenzwertpegels der Leckage.

Als besonders günstig erweist es sich, wenn zumindest ein Teil der Komponenten der Vorrichtung durch additive Fertigung hergestellt ist. Die additive Fertigung, welche eine Vielzahl an unterschiedlichen Verfahren/Herstellungstechnologien in sich zusammenfasst, wird oft auch als Rapid Prototyping oder generative Fertigung bezeichnet. Umgangssprachlich hat sich vor allem der Begriff des 3D-Drucks durchgesetzt, wobei dieser Ausdruck jedoch nicht gleichermaßen für die Gesamtheit der schichtweise aufzubauenden Verfahren zutrifft. Um die Vielzahl der derzeit üblichen Verfahren strukturierter darzustellen, lassen sich diese grob in drei Gruppen einteilen:
- das Sinter- oder Pulverdruckverfahren,
- Druckprozesse mit extrudiertem Baumaterial,
- die Stereolithografie (flüssiges Baumaterial).

Allen diesen Verfahren gemeinsam ist das Grundprinzip, bei welchem ein Körper Schicht für Schicht aufgebaut wird. Dazu wird kein Werkzeug oder eine Form benötigt. Zum Aufbau für das Unterteil und das Oberteil der Vorrichtung werden vorzugsweise zwei identische metallische Platten verwendet.

Weitere Merkmale und Vorteile der Erfindung ergeben sich anhand der Beschreibung von Ausführungsbeispielen anhand von Zeichnungen und aus den Zeichnungen selbst.

Dabei zeigt
- Figur 1: einen Schnitt durch eine Kreiselpumpeneinheit,
- Figur 2: eine Kreiselpumpeneinheit mit einer Vorrichtung zur Leckageüberwachung,
- Figur 3: eine perspektivische Darstellung der Vorrichtung,
- Figur 4: eine schematische Schnittdarstellung durch die Vorrichtung,
- Figur 5a: eine erste stabile Position der Kippanordnung,
- Figur 5b: eine Kippbewegung der Kippanordnung,
- Figur 5c: eine zweite stabile Position der Kippanordnung,
- Figur 6: eine perspektivische Darstellung der Kippanordnung,
- Figur 7: eine perspektivische Sicht in das Oberteil,
- Figur 8: eine perspektivische Darstellung in das Unterteil,
- Figur 9: eine schematische Schnittdarstellung durch das Oberteil.

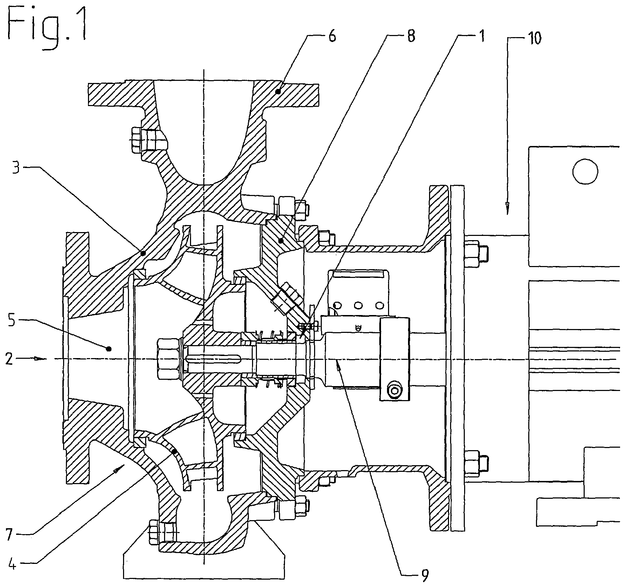

Figur 1 zeigt eine Kreiselpumpeneinheit mit einer Gleitringdichtung 1. Durch einen Saugmund 2 tritt das Medium in die Kreiselpumpe ein. Durch einen Druckstutzen 6 verlässt das Medium die Pumpe. Ein Raum 5 wird von einem Pumpengehäuse 7 und einem Gehäusedeckel 8 begrenzt. Ein Laufrad 4 ist drehfest mit einer Welle 9 verbunden, welche das Laufrad 4 mittels einer Motoranordnung 10 antreibt. Die Motoranordnung 10 umfasst einen Rotor, einen Stator und ein Motorgehäuse. Die Gleitringdichtung 1 ist im Ausführungsbeispiel gemäß Figur 1 in einer Öffnung des Gehäusedeckels 8 integriert.

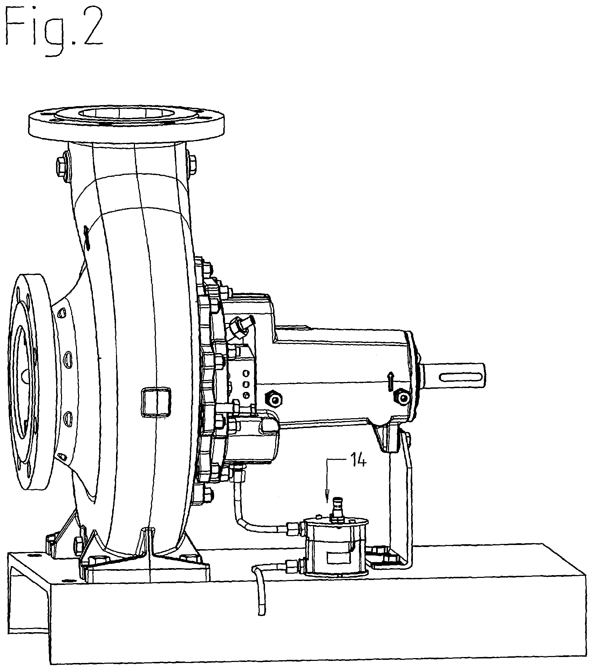

Figur 2 zeigt eine perspektivische Darstellung einer Kreiselpumpeneinheit mit einer Vorrichtung 14 zur Überwachung der Leckage einer Gleitringdichtung 1. Im Ausführungsbeispiel gemäß Figur 2 ist die Vorrichtung 14 außerhalb der Kreiselpumpeneinheit angeordnet. Es ist jedoch auch denkbar, dass die Vorrichtung 14 in der Kreiselpumpeneinheit integriert ist, insbesondere in einem Pumpengehäuseteil und/oder einem Motorgehäuseteil.

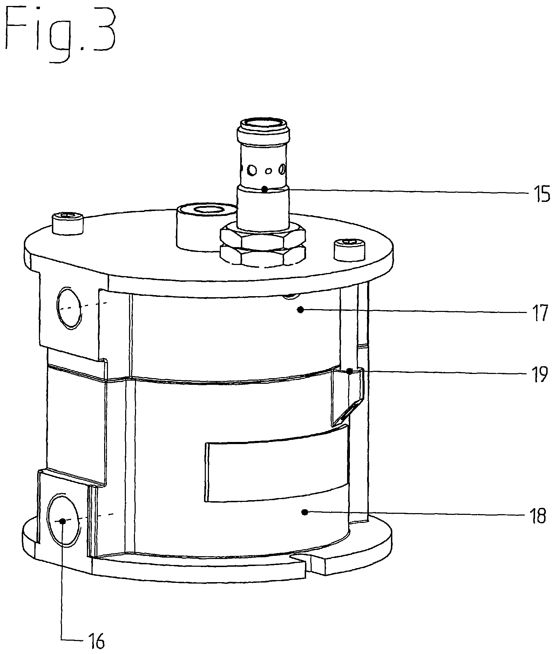

Figur 3 zeigt eine vergrößerte Darstellung der Vorrichtung 14 gemäß der Darstellung in Figur 2. Die Vorrichtung 14 weist einen Anschluss 15 für den Zulauf des Leckagefluids und einen Anschluss 16 für den Ablauf des Leckagefluids auf. Die Vorrichtung 14 umfasst ein als Deckel ausgeführtes Oberteil 17 und ein Unterteil 18. Über Verbindungselemente 19 sind die beiden Teile zu einer kompakten Einheit verbunden.

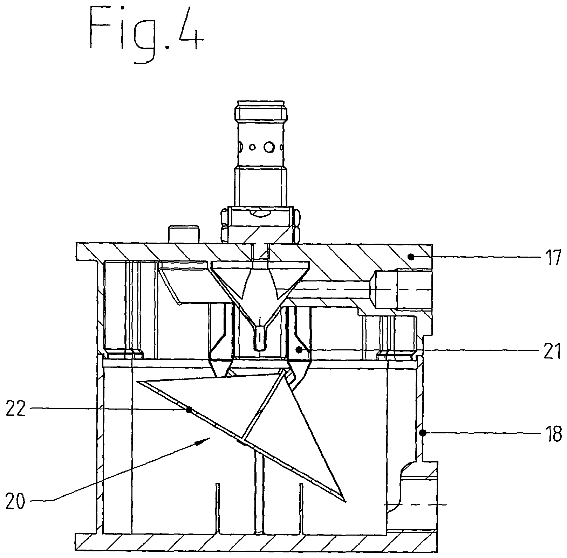

Figur 4 zeigt eine schematische Schnittdarstellung durch die Vorrichtung 14. In einem Raum der von dem Oberteil 17 und dem Unterteil 18 umschlossen ist befindet sich eine Kippanordnung 20. Die Vorrichtung umfasst eine Sicherung 21. Wird das Oberteil 17 auf das Unterteil 18 gesetzt, schließt die Sicherung 21 die Kippanordnung 20 so ein, dass ein Herausspringen verhindert wird. Die Kippanordnung 20 weist eine Wippe 22 auf, die gemäß der Darstellung in Figur 4 in ihrer stabilen Lage gezeigt ist und sich auf einer der beiden Seiten in einem Anschlagpunkt befindet.

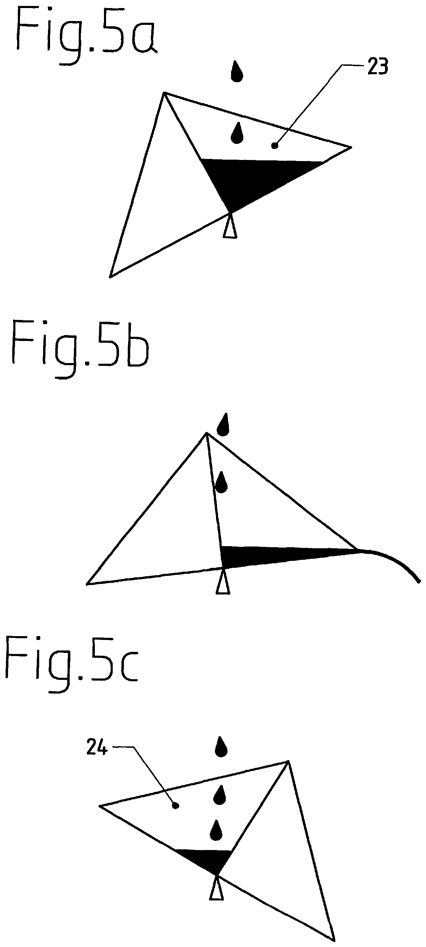

Die Figuren 5a bis 5c zeigen das Prinzip der Kippanordnung 20. Sie hat die Aufgabe die Leckage (z.B. Thermoöl oder Wasser) zu speichern und bei Überschreitung eines Grenzwertes einer aufgenommenen Leckagemenge zu kippen. Dazu befindet sich die Wippe 22 gemäß Figur 5a zunächst in einer stabilen Seitenlage nach links gekippt mit einem definierten Winkel. Zuerst wird das mit Blick auf Figur 5a rechte Reservoir 23 gefüllt. Durch die Füllung verändert sich der Schwerpunkt. Wandert der Schwerpunkt mit Blick auf die Zeichnung nach rechts, erfolgt schließlich gemäß Figur 5b eine Schwenkbewegung. Anschließend wird gemäß Figur 5c das linke Reservoir 24 mit Leckage gefüllt. Im Ausführungsbeispiel handelt sich um eine symmetrisch aufgebaute Wippe 22, wobei die beiden Reservoirs 23, 24 die gleichen Abmessungen aufweisen.

Mit der Vorrichtung wird die aus der Gleitringdichtung 1 austretende Leckagerate [ml/h] bestimmt. Das Kippen der Wippe 22 wird mit einem Bauteil erfasst, dass vorzugsweise als Näherungssensor ausgeführt ist. Das Signal des Bauteils wird von einer Auswerteeinheit zur Berechnung der Leckagerate Q_{leck} genutzt (Q_{leck}=Vₖᵢₚₚ*z/t). Übersteigt die Leckagerate einen vorgegebenen Grenzwert, wird ein Signal generiert, beispielsweise eine Meldung oder ein Alarm. Durch Extrapolation des Kippratenverlaufes kann auch die Dauer bis zum Erreichen des Grenzwertes geschätzt werden.

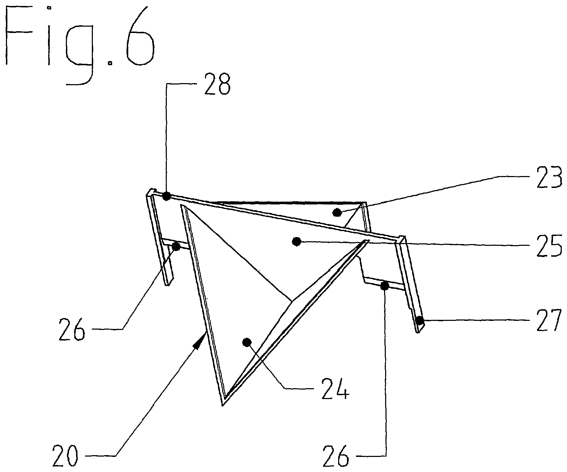

Figur 6 zeigt eine perspektivische Darstellung der Kippanordnung 20, die ein erstes Reservoir 23 und ein zweites Reservoir 24 aufweist. Die beiden Reservoirs 23, 24 sind durch eine Wandung 25 getrennt. Die Wandung 25 ragt über die Reservoirs 23, 24 hinaus, wobei die untere Kante 26 der Wandung 25 eine Auflage für eine Lagerung bilden. An beiden seitlichen Kanten der Wandung 25 sind Platten 27 angeordnet, die zur Erfassung der Kippbewegung dienen können und/oder als axiale Sicherung. Die Wandung 25 wird nach oben von einer Kante 28 begrenzt.

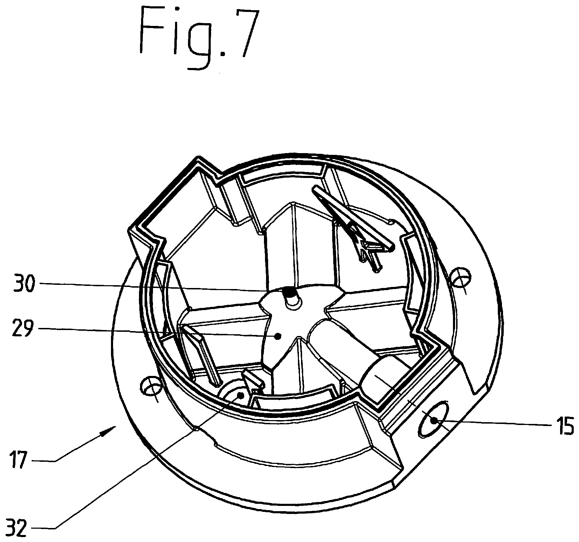

Figur 7 zeigt eine perspektivische Darstellung des Oberteils 17 von innen. Die von der Gleitringdichtung 1 austretende Leckage wird über eine im Pumpengehäuse vorgesehene Leckagebohrung mithilfe einer Rohrleitung in die Zulauföffnung 15, die sich im als Deckel ausgebildeten Oberteil 17 der Vorrichtung 14 befindet, eingeleitet.

Mittels einer ebenfalls im Oberteil 17 integrierten Dosiervorrichtung erfolgt die definierte Zuführung der Leckage in den Unterbau, den zweiten Teil des Gehäuses. Die Dosiervorrichtung umfasst einen Trichter 29 mit einer zugehörigen Kapillare 30. Die Leckage wird dabei mithilfe der Kapillare 30 gezielt in eines der beiden identischen Reservoirs 23, 24 der Kippanordnung 20 geleitet.

Figur 7 zeigt eine Öffnung 32, die der Anordnung des Bauteils zur Erfassung der Kippbewegungen, vorzugsweise einem Näherungssenor dient.

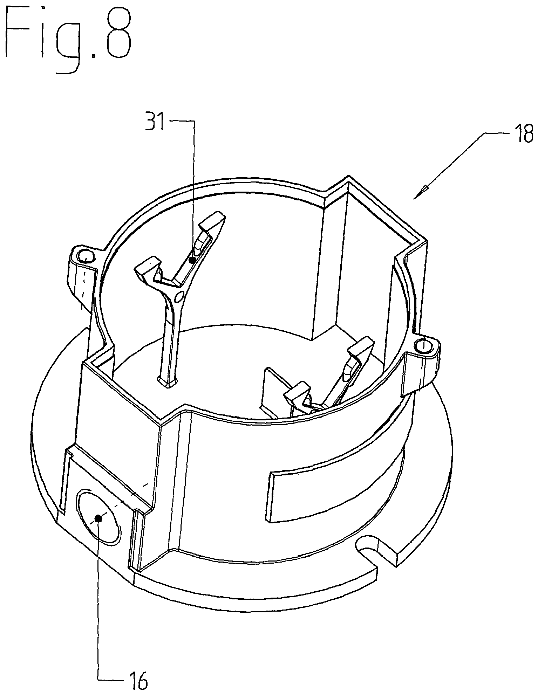

Figur 8 zeigt, dass die Lagerung der Kippanordnung 20 mittels einer Auflage 31 im Unterteil 18 erfolgt. Diese lässt nur eine Rotation unter definiertem Kippwinkel bzgl. einer Achse zu. Um das sichere Auffangen der abtropfenden Leckage in eines der Reservoirs 23, 24 zu gewährleisten, ist die Kippwaage so ausgelegt, dass diese keine Gleichgewichtslage in der Pfanne der Auflage 31 einnimmt, sondern eine Kippstellung zu der einen oder anderen Seite.

Die Reservoirs 23, 24 werden abwechselnd gefüllt und geleert. Ist ein Grenzwert an Leckage in einem der Reservoirs erreicht, so kippt diese und die Leckage fließt auf den Gehäuseboden ab. Aus dem Gehäuse erfolgt die Leckageabfuhr durch den vorgesehenen Ablauf 16 in einen Behälter.

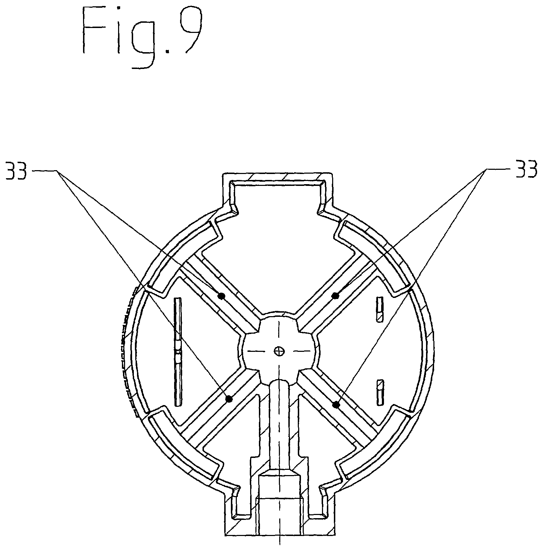

Bei großen Leckagemengen können Trichter 29 und Kapillare 30 das Fluid nicht schnell genug abführen, wodurch ein Rückstau auftreten kann. Um dieser Problematik zu begegnen, weist das Oberteil 17 einen Bypass auf, der ab Überschreitung eines Grenzwertpegels der Leckage im Trichter 17 diese durch die in Figur 9 dargestellten Überlaufkanäle 33 in ein Doppelwandsystem des Oberteils 17 leitet. Das Doppelwandsystem weist pro Kammer eine Öffnung auf, die die Leckage über die Gehäusewand, ohne den Trichter 17 zu passieren, auf den Gehäuseboden ableiten.

## Patentansprüche

1. Leckageüberwachungsvorrichtung für eine Wellendichtung, insbesondere für eine Kreiselpumpe, insbesondere eine Wellendichtung in Form einer Gleitringdichtung (1), wobei die Vorrichtung (14) eine Kippanordnung (20) mit mindestens einem Reservoir (23, 24) zur Aufnahme eines Leckagefluids umfasst, ein Bauteil zur Erfassung einer Anzahl an Kippbewegungen und eine Auswerteeinheit, die anhand der Anzahl an Kippbewegungen die Leckagemenge berechnet,
**dadurch gekennzeichnet, dass**
die Vorrichtung ein Oberteil (17) und ein Unterteil (18) aufweist, wobei das Oberteil (17) eine Dosieranordnung für die Zuführung des Leckagestroms zur Kippanordnung (20) und Überlaufkanäle (33) zur Führung des Leckagestroms aufweist, wobei die Dosieranordnung einen Trichter (29) und eine Kapillare (30) umfasst, wobei die Vorrichtung einen Bypass aufweist, wobei der Bypass an die Dosieranordnung angeschlossen ist und bei einer Überschreitung eines Grenzwertpegels der Leckage im Trichter das Leckagefluid durch die Überlaufkanäle (33) in ein Doppelwandsystem des Oberteils (17) ableitet.

2. Vorrichtung nach Anspruch 1, **dadurch gekennzeichnet, dass** die Vorrichtung (14) zwei Reservoirs (23, 24) zur abwechselnden Füllung mit dem Leckagefluid umfasst, wobei die Reservoirs (23, 24) vorzugsweise gleich groß sind.

3. Vorrichtung nach Anspruch 1 oder 2, **dadurch gekennzeichnet, dass** die Kippanordnung (20) schwenkbar gelagert ist und der Schwerpunkt der ungefüllten Kippanordnung (20) vorzugsweise über deren Schwenkpunkt liegt.

4. Vorrichtung nach einem der Ansprüche 1 bis 3, **dadurch gekennzeichnet, dass** das Oberteil (17) und das Unterteil (18) die Kippanordnung (20) vollständig umschließen.

5. Vorrichtung nach einem der Ansprüche 1 bis 4, **dadurch gekennzeichnet, dass** das Oberteil (17) einen Anschluss (15) für den Eintritt des Leckagestroms in die Vorrichtung (14) aufweist.

6. Vorrichtung nach einem der Ansprüche 1 bis 5, **dadurch gekennzeichnet, dass** das Unterteil (18) eine Auflage (31) für die Kippanordnung (20) aufweist.

7. Vorrichtung nach einem der Ansprüche 1 bis 6, **dadurch gekennzeichnet, dass** das Unterteil (8) einen Anschluss (16) zur Ableitung des Leckagestroms aufweist.

8. Vorrichtung nach einem der Ansprüche 1 bis 7, **dadurch gekennzeichnet, dass** das Bauteil zur Erfassung der Kippbewegung einen induktiven und/oder kapazitiven Sensor aufweist.

9. Vorrichtung nach einem der Ansprüche 1 bis 8, **dadurch gekennzeichnet, dass** zumindest ein Teil der Komponenten der Vorrichtung (14) durch additive Fertigung hergestellt sind.

10. Vorrichtung nach einem der Ansprüche 1 bis 9, **dadurch gekennzeichnet, dass** die Vorrichtung eine Reinigungsöffnung aufweist.

11. Verfahren zur Überwachung der Leckage einer Wellendichtung, insbesondere für eine Kreiselpumpe, vorzugsweise eine Wellendichtung in Form einer Gleitringdichtung, mit einer Vorrichtung nach einem der Ansprüche 1 bis 10 mit folgenden Schritten:
- Sammeln eines Leckagestroms,
- Auslösen einer Kippbewegung,
- Erfassung der Kippbewegung,
- anhand der Anzahl an Kippbewegungen die Leckagemenge berechnen.

## Claims

1. Leakage-monitoring apparatus for a shaft seal, in particular for a centrifugal pump, in particular a shaft seal in the form of a slide ring seal (1), wherein the apparatus (14) comprises a tipping arrangement (20), which has at least one reservoir (23, 24) for receiving a leakage fluid, a component, which serves for detecting a number of tipping movements, and an evaluation unit, which calculates the leakage quantity on the basis of the number of tipping movements,
**characterized in that**
the apparatus has a top part (17) and a bottom part (18), wherein the top part (17) has a dosing arrangement for the feeding of the leakage stream to the tipping arrangement (20) and has overflow channels (33) for guiding the leakage stream, wherein the dosing arrangement comprises a funnel (29) and a capillary (30), wherein the apparatus has a bypass, wherein the bypass is connected to the dosing arrangement and, in the event of a limit-value level of the leakage in the funnel being exceeded, discharges the leakage fluid into a double-walled system of the top part (17) through the overflow channels (33).

2. Apparatus according to Claim 1, **characterized in that** the apparatus (14) comprises two reservoirs (23, 24) for alternate filling with the leakage fluid, wherein the reservoirs (23, 24) are preferably of equal size.

3. Apparatus according to Claim 1 or 2, **characterized in that** the tipping arrangement (20) is pivotably mounted, and the centre of gravity of the unfilled tipping arrangement (20) is preferably situated above the pivot point thereof.

4. Apparatus according to one of Claims 1 to 3, **characterized in that** the top part (17) and the bottom part (18) completely enclose the tipping arrangement (20).

5. Apparatus according to one of Claims 1 to 4, **characterized in that** the top part (17) has a connection (15) for the entry of the leakage stream into the apparatus (14).

6. Apparatus according to one of Claims 1 to 5, **characterized in that** the bottom part (18) has a support (31) for the tipping arrangement (20).

7. Apparatus according to one of Claims 1 to 6, **characterized in that** the bottom part (8) has a connection (16) for the discharge of the leakage stream.

8. Apparatus according to one of Claims 1 to 7, **characterized in that** the component for detecting the tipping movement has an inductive and/or capacitive sensor.

9. Apparatus according to one of Claims 1 to 8, **characterized in that** at least some of the components of the apparatus (14) are produced by additive manufacturing.

10. Apparatus according to one of Claims 1 to 9, **characterized in that** the apparatus has a cleaning opening.

11. Method for monitoring the leakage of a shaft seal, in particular for a centrifugal pump, preferably a shaft seal in the form of a slide ring seal, with an apparatus according to one of Claims 1 to 10, comprising the following steps:
- collecting a leakage stream,
- triggering a tipping movement,
- detecting the tipping movement,
- calculating the leakage quantity on the basis of the number of tipping movements.

## Revendications

1. Dispositif de surveillance de fuites pour une garniture d'étanchéité d'arbre, notamment pour une pompe centrifuge, notamment une garniture d'étanchéité d'arbre sous la forme d'une garniture d'étanchéité à anneau glissant (1), le dispositif (14) comprenant un agencement de basculement (20) avec au moins un réservoir (23, 24) pour recevoir un fluide de fuite, un composant pour détecter un nombre de mouvements de basculement et une unité d'évaluation qui calcule la quantité de fuite à l'aide du nombre de mouvements de basculement,
**caractérisé en ce que**
le dispositif présente une partie supérieure (17) et une partie inférieure (18), la partie supérieure (17) présentant un agencement de dosage pour l'amenée du courant de fuite à l'agencement de basculement (20) et des canaux de débordement (33) pour l'acheminement du courant de fuite, l'agencement de dosage comprenant un entonnoir (29) et un capillaire (30), le dispositif présentant une dérivation, la dérivation étant raccordée à l'agencement de dosage et, en cas de dépassement d'un niveau limite de fuite dans l'entonnoir, évacuant le fluide de fuite par les canaux de débordement (33) dans un système à double paroi de la partie supérieure (17).

2. Dispositif selon la revendication 1, **caractérisé en ce que** le dispositif (14) comprend deux réservoirs (23, 24) pour le remplissage alterné avec le fluide de fuite, les réservoirs (23, 24) étant de préférence de taille égale.

3. Dispositif selon la revendication 1 ou 2, **caractérisé en ce que** l'agencement de basculement (20) est monté pivotant et le centre de gravité de l'agencement de basculement (20) non rempli est de préférence situé au-dessus de son point de pivotement.

4. Dispositif selon l'une quelconque des revendications 1 à 3, **caractérisé en ce que** la partie supérieure (17) et la partie inférieure (18) entourent entièrement l'agencement de basculement (20).

5. Dispositif selon l'une quelconque des revendications 1 à 4, **caractérisé en ce que** la partie supérieure (17) présente un raccord (15) pour l'entrée du courant de fuite dans le dispositif (14).

6. Dispositif selon l'une quelconque des revendications 1 à 5, **caractérisé en ce que** la partie inférieure (18) présente un support (31) pour l'agencement de basculement (20).

7. Dispositif selon l'une quelconque des revendications 1 à 6, **caractérisé en ce que** la partie inférieure (8) présente un raccord (16) pour l'évacuation du courant de fuite.

8. Dispositif selon l'une quelconque des revendications 1 à 7, **caractérisé en ce que** le composant destiné à détecter le mouvement de basculement présente un capteur inductif et/ou capacitif.

9. Dispositif selon l'une quelconque des revendications 1 à 8, **caractérisé en ce qu'**au moins une partie des composants du dispositif (14) est fabriquée par fabrication additive.

10. Dispositif selon l'une quelconque des revendications 1 à 9, **caractérisé en ce que** le dispositif présente une ouverture de nettoyage.

11. Procédé de surveillance de la fuite d'une garniture d'étanchéité d'arbre, notamment pour une pompe centrifuge, de préférence une garniture d'étanchéité d'arbre sous la forme d'une garniture d'étanchéité à anneau glissant, avec un dispositif selon l'une quelconque des revendications 1 à 10, avec les étapes suivantes :
- la collecte d'un courant de fuite,
- le déclenchement d'un mouvement de basculement,
- la détection du mouvement de basculement,
- le calcul de la quantité de fuite à l'aide du nombre de mouvements de basculement.
